**Europäisches Patentamt**

**European Patent Office**

**Office européen des brevets**

(11) Veröffentlichungsnummer: **0 152 991**
**A2**

## (12) EUROPÄISCHE PATENTANMELDUNG

(21) Anmeldenummer: 85200218.7

(22) Anmeldetag: 20.02.85

(51) Int. Cl.⁴: **G 02 B 6/28, G 02 B 6/12**

(30) Priorität: 21.02.84 DE 3406207

(43) Veröffentlichungstag der Anmeldung: 28.08.85
**Patentblatt 85/35**

(84) Benannte Vertragsstaaten: **DE FR GB IT NL SE**

(71) Anmelder: **Philips Patentverwaltung GmbH,
Billstrasse 80, D-2000 Hamburg 28 (DE)**
(84) Benannte Vertragsstaaten: **DE**

(71) Anmelder: **N.V. Philips' Gloeilampenfabrieken,
Groenewoudseweg 1, NL-5621 BA Eindhoven (NL)**
(84) Benannte Vertragsstaaten: **FR GB IT NL SE**

(72) Erfinder: **Neyer, Andreas, Bremke 13, D-5860 Iserlohn
(DE)**

(74) Vertreter: **Meier, Friedrich, Dipl.-Ing. et al, c/o PHILIPS
PATENTVERWALTUNG GMBH
Billstrasse 80 Postfach 10 51 49,
D-2000 Hamburg 28 (DE)**

(54) **Integriert-optische Wellenlängenmultiplex- und -demultiplexeinrichtung für Monomode-Übertragungssysteme und ihre Verwendung.**

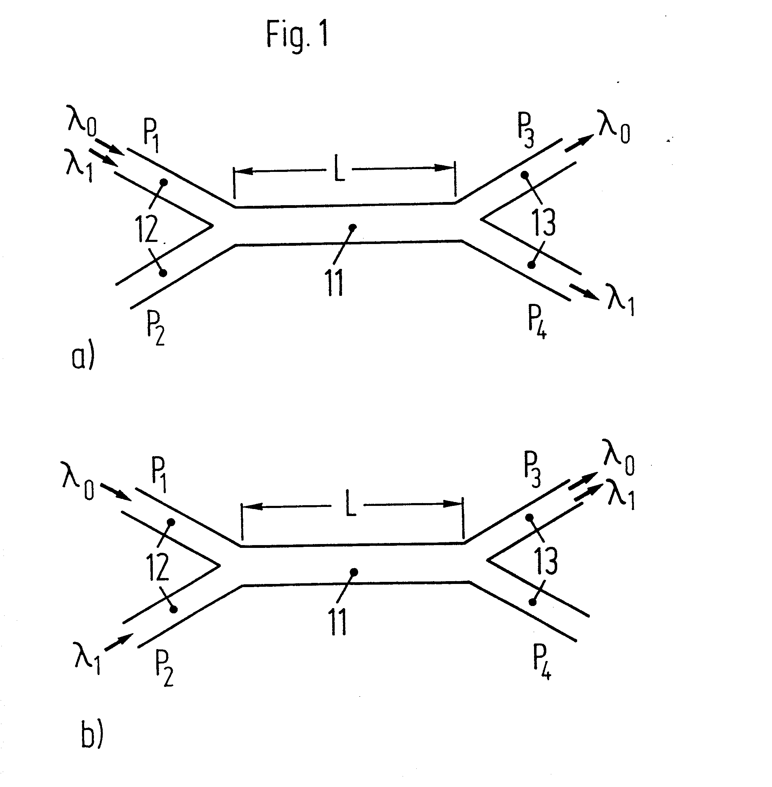

(57) Um die grosse Übertragungskapazität von Monomode-Übertragungssystemen voll ausnutzen zu können, wird eine integriert-optische Wellenlängenmultiplex- und -demultiplexeinrichtung für Monomode-Systeme angegeben. Wie in Fig. 1 dargestellt, besteht sie aus einem lateral zweimodigen Streifenwellenleiter (11), an den jeweils auf beiden Seiten zwei Monomode-Streifenwellenleiter (12, 13) angeschlossen sind.

Die Wellenlängenselektivität dieses Bauelements wird durch die unterschiedlichen Modendispersionen der beiden in dem zweimodigen Streifenwellenleiter ausbreitungsfähigen Moden erreicht. Die Ankopplung dieser Moden an die Monomode-Streifenwellenleiter erfolgt durch adiabatische Modenkonversion. Bedingt durch das Funktionsprinzip der Zweimodeninterferenz besitzt das Bauelement eine periodische Wellenlängenabhängigkeit. Diese wird dazu ausgenutzt, kompakte Vielkanal-Multiplexer/-Demultiplexer in Form einer Baumstruktur aufzubauen.

Bei der Erstellung des Multiplexers/Demultiplexers in geeigneten Materialien bietet sich auch nach dem Herstellungsprozess die Möglichkeit, die Wellenlängenabhängigkeit und das Aufteilungsverhältnis zwischen den Lichtleistungen in den beiden Ausgangswellenleitern mit Hilfe zahlreicher Einrichtungen zu verändern.

Integriert-optische Wellenlängenmultiplex- und -demultiplex-
einrichtung für Monomode-Übertragungssysteme und ihre Verwendung

Die Erfindung betrifft einen integriert-optischen Wellenlängenmultiplexer und -demultiplexer für optisch einmodige Glasfaserübertragungssysteme und seine Verwendung.

Die volle Ausnutzung der Übertragungskapazität von Glasfaserübertragungssystemen erfordert optische Wellenlängenmultiplex- und
-demultiplexverfahren, abgekürzt WDM (wavelength division
multiplexing). Diese Verfahren zeichnen sich dadurch aus, daß mit
Hilfe unterschiedlicher optischer Frequenzen gleichzeitig mehrere
Informationskanäle ohne gegenseitige Beeinflussung mit einer Glasfaser übertragen werden können.

Im Bereich der Monomode-Übertragungsstrecken werden bisher hauptsächlich WDM-Verfahren eingesetzt, die mit mikrooptischen Bauelementen
(T. Uchida und Sugimoto: 4th European Conference on Optical Communication, Genf 1978, Beitrag 8-1, G. Winzer et al.: Appl. Opt., 20 (1981),
Seiten 3128 - 3135, M. Seki et al.: Electron. Lett., 18 (1982),
Seiten 257 - 258) und mit faseroptischen Bauelementen (M. Digonnet
und H.J. Shaw: Appl. Opt., 22 (1983), Seiten 484 - 491, S.K. Sheem
und R.P. Moeller: J. Appl. Phys., 51 (1980), Seiten 4050 - 4052)
hergestellt werden. All diese Verfahren benötigen einen relativ
großen Aufwand für die Herstellung und den Einbau der wellenlängenselektiven Elemente und für die Justierung der einzelnen Monomode-
Fasern.
Wegen dieser Nachteile werden seit einiger Zeit WDM-Einrichtungen
untersucht, in denen der Einsatz von Bauelementen der Integrierten
Optik vorgesehen ist. Die Integrierte Optik gestattet die Herstellung
vieler wellenlängenselektiver Bauelemente mit den notwendigen Monomode-Streifenwellenleitern auf einem Substrat und beinhaltet außerdem die Fertigungsvorteile der Planartechnologie.
Für WDM-Verfahren sind mit den Mitteln der Integrierten Optik
besonders zwei Effekte ausgenutzt worden: die Wellenlängenselektivität des Richtkopplers mit nicht identischen Wellenleitern

(R.C. Alferness und R.V. Schmidt, Appl. Phys. Lett., 33 (1978), Seiten 161 - 162) und die starke Wellenlängenabhängigkeit der TE-TM-Konversion (R.C. Alferness und L.L. Buhl, Opt. Lett., 5 (1980), Seiten 473 - 475).

Die Nachteile der zitierten Richtkopplerlösung liegen zum einen in den nicht identischen Streifenwellenleitern, die zu unterschiedlichen Koppelwirkungsgraden bei der Ankopplung an Glasfasern oder nachfolgende kaskadierte Richtkoppler führen, und zum anderen in der Notwendigkeit, die einzelnen Richtkoppler im Falle eines Vielkanal-WDM alle unterschiedlich dimensionieren zu müssen. Außerdem sprechen die große Baulänge des Richtkopplers (∿ 1 cm) und die erzielte niedrige Übersprechdämpfung (- 17 dB) gegen eine Kaskadierung mehrerer Richtkoppler für den Einsatz im Vielkanal-WDM. Der TE-TM-Konverter besitzt zwar eine kürzere Baulänge (6 mm) und eine bessere Übersprechdämpfung (20 dB), hat dafür aber den großen Nachteil, daß er nur aus einem Streifenwellenleiter besteht und somit weder eine räumliche Zusammenführung noch eine räumliche Trennung der spektral zerlegten Signale gestattet. Damit ist er für den Vielkanal-WDM-Einsatz nicht oder nur bedingt auf der Demultiplexerseite geeignet.

Der Erfindung liegt die Aufgabe zugrunde, einen integriert-optischen Wellenlängenmultiplexer /-demultiplexer für Monomode-Übertragungssysteme anzugeben, der als passives und elektrisch steuerbares Bauelement für Vielkanal-WDM eingesetzt werden kann und die beim Stand der Technik angeführten Nachteile nicht besitzt.

Diese Aufgabe wird erfindungsgemäß dadurch gelöst, daß der integriert-optische Wellenlängenmultiplexer /-demultiplexer aus einem lateral zweimodigen Streifenwellenleiter besteht, an den auf jeder Seite jeweils zwei Monomode-Streifenwellenleiter angeschlossen werden.

Die Struktur der erfindungsgemäßen WDM-Einrichtung ist in Fig. 1 dargestellt. Kernstück dieses Bauelements ist der lateral zweimodige Streifenwellenleiter 11, dessen wellenlängenabhängige Modendispersion zur Wellenlängenselektion ausgenutzt wird. Die nahezu verlustlose Ankopplung der Monomode-Streifenwellenleiter 12 und 13 an den zweimodigen Streifenwellenleiter erfolgt mit Hilfe getaperter Richtkoppler, deren Wirkungsweise z.B. in der Arbeit A. Neyer: Electron. Lett., 19 (1983), Seiten 553 - 554 beschrieben ist.

Das Funktionsprinzip des hier angegebenen Wellenlängenmultiplexers / -demultiplexers beruht auf der differentiellen Modendispersion des zweimodigen Wellenleiters, d.h. auf der unterschiedlichen Abhängigkeit der Phasenkonstanten der Grundwelle ($\beta_0$) und des ersten lateralen Grundmodus ($\beta_1$) von der Wellenlänge $\lambda$. Diese Tatsache hat die Konsequenz, daß beide Wellen nach dem Durchlaufen einer Strecke L des Wellenleiters 11 eine relative Phasendifferenz $\Delta\varphi$ besitzen, die von der Wellenlänge $\lambda$ in folgender Weise abhängt

$$\Delta\varphi = (\Delta\beta + \gamma \cdot \Delta\lambda)\ L \ . \qquad\qquad (1)$$

Dabei bezeichnet $\Delta\beta = \beta_0(\lambda_0) - \beta_1(\lambda_0)$ die Differenz der Phasenkon-stanten bei der Betriebswellenlänge $\lambda_0$, $\gamma$ die differentielle Moden-dispersion in der Umgebung von $\lambda_0$

$$\gamma = \left\{ \frac{d\beta_1}{d\lambda}\bigg|_{\lambda_0} - \frac{d\beta_0}{d\lambda}\bigg|_{\lambda_0} \right\} \qquad\qquad (2)$$

und $\Delta\lambda = \lambda - \lambda_0$ die Wellenlängendifferenz zu $\lambda_0$.
Unter der Annahme, daß eine näherungsweise Linearisierung der Dis-persionskurven $\beta_0(\lambda)$ und $\beta_1(\lambda)$ in der Umgebung der Betriebswellen-länge $\lambda_0$ zulässig ist, ergibt sich ein wellenlängenunabhängiger Faktor $\gamma$.
Der Zusammenhang zwischen der relativen Phasendifferenz $\Delta\varphi$ zwischen beiden Moden am Ausgang des zweimodigen Wellenleiters und dem Aufteilungsverhältnis der Lichtleistung in die beiden Monomode-Ausgangswellenleiter ist sowohl in der oben genannten Arbeit von A. Neyer als auch in der Patentanmeldung P 3322508.7 ausführlich beschrieben worden.

Auf der Grundlage dieser Ergebnisse können die Verhältnisse der Lichtleistungen $P_3/P_1$ und $P_4/P_1$, wobei $P_1$ die Eingangslichtleistung und $P_3$, $P_4$ die Ausgangslichtleistungen darstellen, durch die Beziehungen

$$P_3/P_1 \sim \cos^2 [(\Delta\beta + \gamma\cdot\Delta\lambda)\cdot L/2]$$

$$\tag{3}$$

$$P_4/P_1 \sim \sin^2 [(\Delta\beta + \gamma\cdot\Delta\lambda)\cdot L/2]$$

beschrieben werden. Die Beziehung (3) hat folgende Konsequenzen:

1) Bei einer Wellenlängenänderung von $\lambda_0$ nach $\lambda_1 = \lambda_0 + \Delta\lambda_\pi$ mit

$$\Delta\lambda_\pi = \pi/\gamma L \tag{4}$$

wird Licht, welches sich bei der Wellenlänge $\lambda = \lambda_0$ im Ausgangszustand $P_3$ befindet, bei der Wellenlänge $\lambda_1$ vollständig in den Ausgangszustand $P_4$ überführt. Dieses Verhalten ist in Fig. 1a) dargestellt und ist für die Anwendung als Wellenlängendemultiplexer geeignet.

2) Das Bauelement ist reziprok und bidirektional. Daraus resultiert, daß Ein- und Ausgänge vertauscht werden können, ohne das Übertragungsverhalten zu ändern. Damit bietet das Bauelement die Möglichkeit, als Wellenlängenmultiplexer eingesetzt zu werden (Fig. 1b).

3) Die Änderung der Ausgangszustände $P_3$ und $P_4$ ist frequenz- bzw. wellenlängenperiodisch. Somit herrschen bei den Wellenlängen

$$\lambda_n = \lambda_0 + n\Delta\lambda_\pi \tag{5}$$

die gleichen Lichtverteilungen in den Ausgangszuständen wie bei der Wellenlänge $\lambda_0$.

Diese wellenlängenperiodische Eigenschaft unterscheidet den hier angegebenen Multiplexer/Demultiplexer ganz wesentlich von der unsymmetrischen Richtkoppler- und TE-TM-Konverterlösung. Sie bietet den unten näher ausgeführten Vorteil, daß ein Vielkanal-Multiplexer in Form einer Baumstruktur erstellt werden kann.

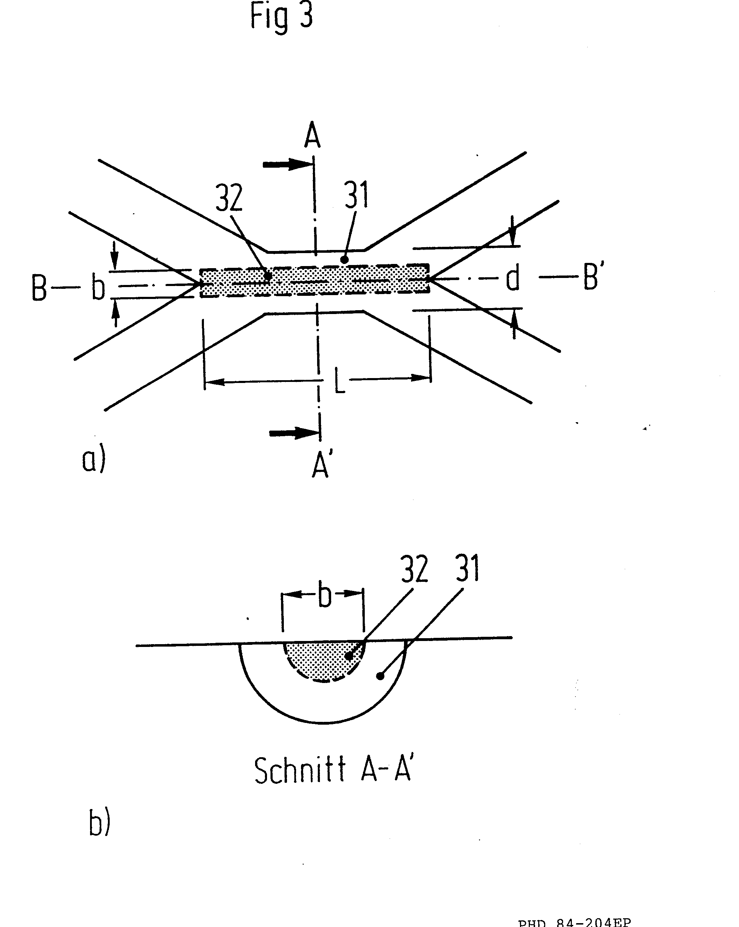

4) Die Wellenlängendifferenz $\Delta\lambda_\pi$, bei der eine vollständige Vertauschung der Ausgangslichtleistungen erfolgt, kann zum einen durch die Veränderung der Länge L, zum anderen durch eine Modifikation der differentiellen Modendispersion $\gamma$ erreicht werden. Eine solche Modifikation ist besonders dann sehr wirkungsvoll, falls eine streifenförmige Brechzahländerung im Bereich des zweimodigen Wellenleiters - wie in Fig. 3 dargestellt - vorgenommen wird. Dieser Brechzahlstreifen (32), dessen Breite b kleiner als die Breite d des Streifenwellenleiters (31) ist, verläuft parallel und symmetrisch zur Achse B-B'. Aufgrund dieser Anordnung wird die Modendispersion des symmetrischen Modus wesentlich stärker beeinflußt als die des antisymmetrischen Modus, da dieser im Bereich der Symmetrielinie B-B' einen Nulldurchgang der Feldverteilung verzeichnet. Auf diese Weise wird sowohl eine Änderung des $\Delta\beta$ als auch eine Änderung der differentiellen Modendispersion $\gamma$ erreicht. Der beschriebene Brechzahlstreifen kann nun einerseits statisch (z.B. durch Ionenimplantation, Ionenaustausch etc.) hergestellt werden oder aber auch durch physikalische Effekte wie z.B. den elektrooptischen Effekt induziert werden. Dadurch ergibt sich die Möglichkeit, den Wellenlängenmultiplexer /-demultiplexer auf eine vorgegebene Wellenlängendifferenz $\Delta\lambda$ z.B. elektrisch abzustimmen.

Mit Hilfe des in der Patentanmeldung P 3322508.7 beschriebenen Prinzips ist es ebenfalls möglich, das $\Delta\beta$ (siehe Gl. 1) zu ändern und damit das Lichtaufteilungsverhältnis $P_3/P_4$ z.B. elektrisch zu steuern.

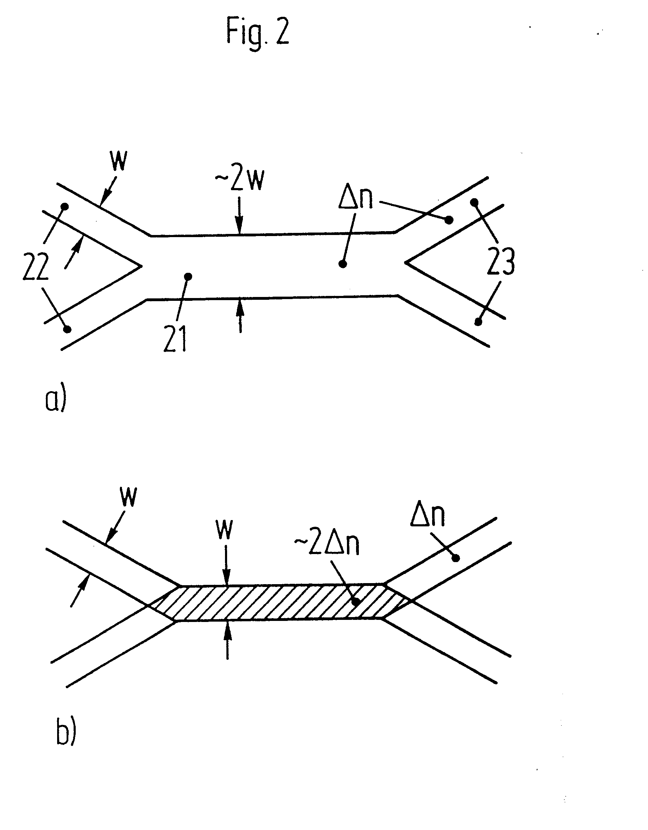

Zur Herstellung des zweimodigen Wellenleiters werden zwei Möglichkeiten angegeben, die in Fig. 2 schematisch dargestellt sind:

a) Der Wellenleiter 21 besitzt die gleiche maximale Brechzahlerhöhung $\Delta n$

wie die Wellenleiter 22 und 23, ist jedoch um so viel breiter ($\sim$ 2w), daß er zwei Moden führt, oder b) er besitzt die gleiche Breite w wie die Wellenleiter 22 und 23, weist dafür aber ein größeres $\Delta n$ ($\sim$ 2$\Delta n$) auf, um so die Führung der zwei Moden zu gewährleisten.

Die erstgenannte Struktur ist als BOA-Koppler bekannt (M. Papuchon und A. Roy: Appl. Phys. Lett., 31 (1977), Seiten 266 - 267), während die zweite auf dem Prinzip der Wellenleiterkreuzung mit doppeltem $\Delta n$ im Überschneidungsbereich (siehe oben genannte Arbeit von A. Neyer) aufbaut.

Die einfache Herstellung des Wellenlängenmultiplexers /-demultiplexers in den unterschiedlichsten Materialien (z.B. Glas, $LiNbO_3$, GaAs etc.) erlaubt die Realisierung zahlreicher neuartiger Ausbildungen der Erfindung, die in den Ansprüchen 1 - 9 beschrieben sind und in den Ausführungsbeispielen der Erfindung näher erläutert werden.

Ausführungsbeispiele der Erfindung sind in den Zeichnungen dargestellt und werden im folgenden näher beschrieben:

Fig. 1   zeigt den integriert-optischen Wellenlängenmultiplexer / -demultiplexer mit einem zweimodigen Streifenwellenleiter und vier angeschlossenen Monomode-Streifenwellenleitern,

Fig. 2   zeigt zwei Ausführungsbeispiele der Erfindung, wobei der zweimodige Streifenwellenleiter
a) eine nahezu doppelt so große Breite bzw.
b) eine nahezu doppelt so große maximale Brechzahlerhöhung wie die der Monomode-Streifenwellenleiter besitzt,

Fig. 3   zeigt einen Wellenlängenmultiplexer /-demultiplexer mit zusätzlich eingeprägtem Brechzahlstreifen.
a) Aufsicht
b) Schnitt A-A',

Fig. 4   zeigt Elektrodenkonfigurationen, mit denen der angegebene Wellenlängenmultiplexer /-demultiplexer elektrooptisch abgestimmt werden kann, und zwar auf elektrooptischen Substraten, bei denen

a) das elektrische Feld parallel zur Substratoberfläche,
b) das elektrische Feld senkrecht zur Substratoberfläche
ausgenutzt wird,

Fig. 5    zeigt einen thermooptisch abstimmbaren Wellenlängenmultiplexer/
-demultiplexer,

Fig. 6    zeigt die Anwendung des Wellenlängenmultiplexers /-demultiplexers für eine Vielkanal-WDM Einrichtung in kaskadierter
Anordnung, und zwar
a) den schematsichen Aufbau,
b) das Funktionsprinzip.

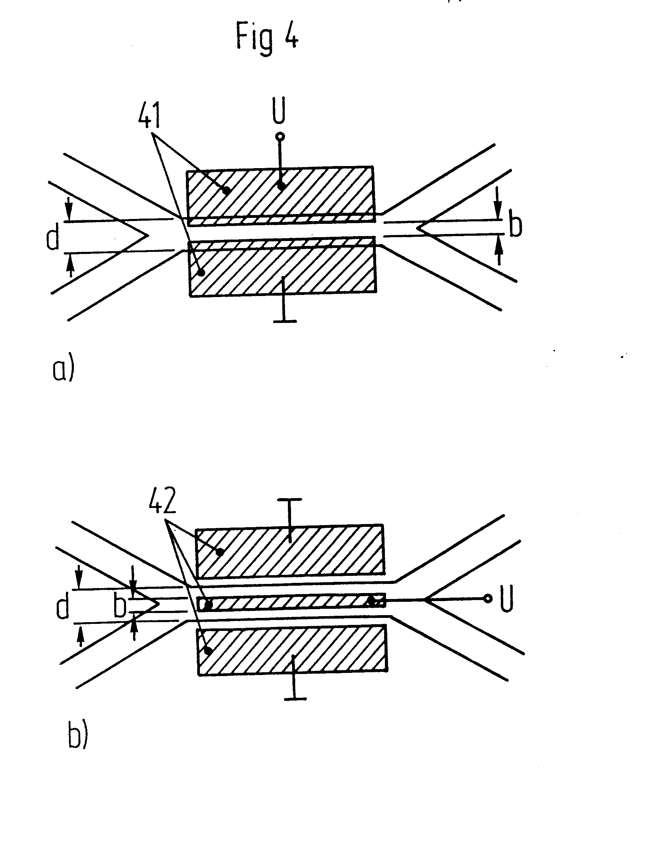

Fig. 4a   zeigt einen Wellenlängenmultiplexer /-demultiplexer in einem
elektrooptischen Material, dessen größter elektrooptischer
Koeffizient durch elektrische Felder parallel zur Substratoberfläche ausgenutzt wird, wie das z.B. in Y- bzw. X-
geschnittenen LiNbO$_3$- und LiTaO$_3$-Kristallen der Fall ist.

Die zwei Koplanar-Elektroden 41 besitzen einen Abstand b,
der kleiner als die Wellenleiterbreite d ist. Mit einer an
diese Elektroden angelegten Spannung wird die Brechzahl des
Wellenleiters im Bereich zwischen den Elektroden aufgrund
des elektrooptischen Effektes geändert.
Dadurch ergibt sich eine spannungsabhängige differentielle
Änderung der Modendispersion $\gamma(U)$, die sich gemäß Gleichung (4)
auf $\Delta\lambda_{\eta}$ auswirkt. Auf diese Weise lassen sich mit Hilfe
eines angelegten elektrischen Feldes z.B. Schwankungen in der
Laserwellenlänge oder fabrikationsbedingte Toleranzen bei der
Wellenleiterherstellung elektrooptisch ausgleichen.

Fig. 4b   zeigt einen Wellenlängenmultiplexer /-demultiplexer in einem
elektrooptischen Material, dessen größter elektrooptischer
Koeffizient mit Hilfe von elektrischen Feldern senkrecht zur Substratoberfläche ausgenutzt wird, wie das z.B. in Z-geschnittenen $LiNbO_3$- und $LiTaO_3$-Kristallen der Fall ist.
Die Breite b der Mittelelektrode der Dreielektrodenstruktur 42 ist kleiner als die Wellenleiterbreite d. Mit einer an diese Elektrodenanordnung angelegten Spannung U wird die Brechzahl des Wellenleiters insbesondere unter der Mittelelektrode aufgrund des elektrooptischen Effektes verändert.

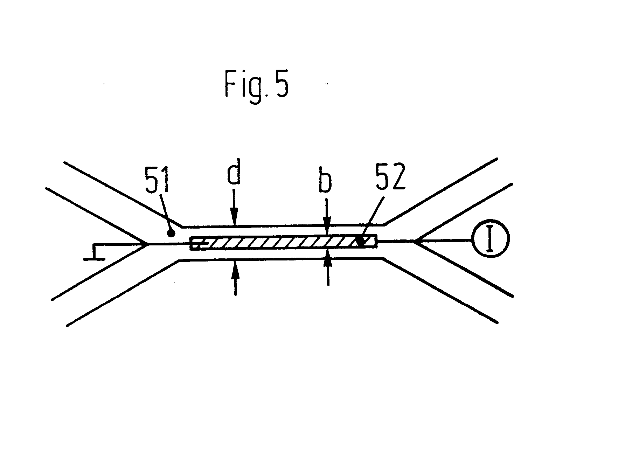

Fig. 5   zeigt einen Wellenlängenmultiplexer /-demultiplexer in einem Material, das den thermooptischen Effekt zeigt, wie z.B. Glas (M. Haruna und J. Koyoma: Appl. Opt., 21 (1982), Seiten 3461 - 3465). Das auf den Wellenleiter 51 aufgebrachte Nickel-Chrom Heizelement 52 besitzt die Breite b, die kleiner als die Wellenleiterbreite d ist. Der durch das Heizelement 52 geführte Strom I bewirkt aufgrund des thermooptischen Effektes eine Brechzahländerung im Wellenleiter, die direkt unter dem Heizelement maximal ist. Daraus resultiert eine stromabhängige Änderung der differentiellen Modendispersion: $\gamma = \gamma(I)$.

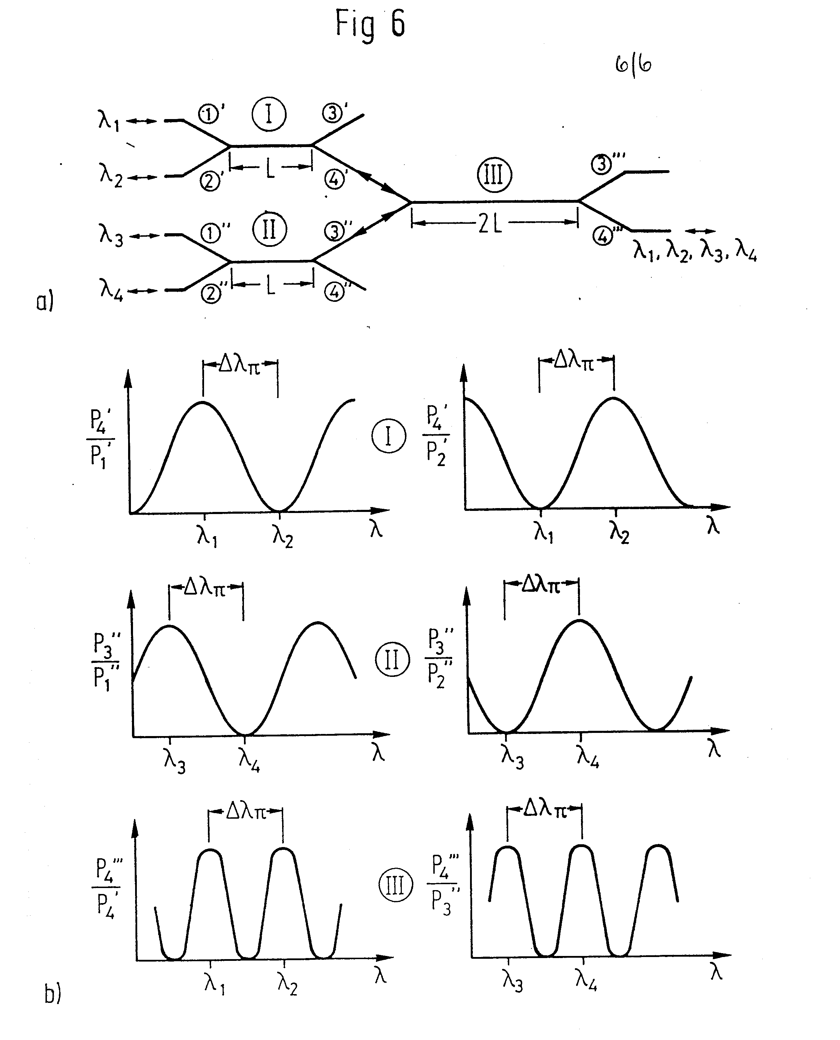

Fig. 6a zeigt den schematischen Aufbau eines 4-Kanal-Wellenlängenmultiplexers /-demultiplexers. Dazu werden zwei identische erfindungsgemäße 2-Kanal-Wellenlängenmultiplexer (I, II) parallel geschaltet, deren Ausgänge 4' und 3" wiederum als Eingänge des dritten Multiplexers (III) dienen. Der Multiplexer III unterscheidet sich von den Multiplexern I und II dadurch, daß er die doppelte Länge 2L des zweimodigen Multiplexerwellenleiters aufweist.

Fig. 6b zeigt das Funktionsprinzip des 4-Kanal-Wellenlängenmultiplexers/ -demultiplexers. Aufgrund identischer Dimensionierung besitzen die beiden Multiplexer I und II ein identisch $\Delta\lambda_{\pi}$.
Sind nun die Wellenlängen $\lambda_1$ und $\lambda_2$ so gewählt, daß ihre Differenz gerade $\Delta\lambda_{\pi}$ entspricht, dann erscheinen beide Wellenlängen gemäß Gleichungen (3) und (4) am Ausgang 4' des Multiplexers I.

Für die Wellenlänge $\lambda_3$ und $\lambda_4$ gilt, daß sie am selben Ausgang des Multiplexers II erscheinen, falls auch deren Differenz gerade $\Delta\lambda_{\Pi}$ entspricht. Die Transmissionscharakteristik des Multiplexers wird im hier betrachteten Fall elektrooptisch so eingestellt, daß alles Licht der Wellenlängen $\lambda_3$ und $\lambda_4$ in den Ausgangsarm 3" ausgekoppelt wird. Da nun der Multiplexer III eine doppelt so große Länge (2L) wie die der Multiplexer I und II (L) aufweist, ist gemäß Gleichungen (3) und (4) seine Periodizität in $\lambda$ auch doppelt so groß. Das bedeutet, daß zwei Lichtwellenlängen mit der Wellenlängendifferenz $\Delta\lambda_{\Pi}$, die entweder im Eingangsarm 4' oder 3" eingekoppelt werden, am selben Ausgangsarm des Multiplexers III erscheinen.

Sind die Wellenlängen $\lambda_1$ bis $\lambda_4$ nun so gestaffelt, daß die Differenzen $\lambda_1 - \lambda_3 = \lambda_4 - \lambda_1 = \lambda_2 - \lambda_4 = \Delta\lambda_{\Pi}/2$ sind, dann werden all diese Wellenlängen gemeinsam in einen der beiden Ausgänge 4''' oder 3''' ausgekoppelt. Der gewünschte Ausgangskanal kann elektrooptisch angewählt werden.

Durch eine Kaskadierung mehrerer in Fig. 6a gezeigter Strukturen können N-Kanal Multiplexer / Demultiplexer aufgebaut werden. Dazu werden die $N = 2^n$ (n = 1,2,3 etc.) Wellenlängen mit Hilfe von n hintereinandergeschalteten erfindungsgemäßen Multiplexer-/Demultiplexerstufen nahezu verlustlos in einen Wellenleiter zusammengeführt bzw. wellenlängenselektiv auf N Wellenleiter verteilt. Die Anzahl der parallel geschalteten Multiplexer / Demultiplexer in einer Stufe geht dabei von $2^{n-1}$ in der ersten bzw. letzten Stufe auf einen einzigen Multiplexer in der letzten bzw. ersten Stufe zurück. Die Länge der lateral zweimodigen Multiplexer-/Demultiplexer-Streifenwellenleiter steigt dagegen von L in der ersten bzw. letzten Stufe auf $2^{n-1} \cdot L$ in der letzten bzw. ersten Stufe an. Durch eine solche Kaskadierung lassen sich insbesondere sehr verlustarme und kompakte N-Kanal Wellenlängenmultiplexer herstellen.

Patentansprüche

1) Wellenlängenmultiplex- und -demultiplexeinrichtung, g e k e n n - z e i c h n e t  durch einen lateral zweimodigen Streifenwellenleiter, an den auf jeder Seite zwei Monomode-Streifenwellenleiter angeschlossen sind.

2) Wellenlängenmultiplex- und -demultiplexeinrichtung nach Anspruch 1, dadurch  g e k e n n z e i c h n e t , daß der zweimodige Streifenwellenleiter nahezu die gleiche maximale Brechzahlerhöhung wie die der Monomode-Streifenwellenleiter aufweist, jedoch eine größere Breite als diese besitzt.

3) Wellenlängenmultiplex- und -demultiplexeinrichtung nach Anspruch 1, dadurch  g e k e n n z e i c h n e t , daß der zweimodige Streifenwellenleiter nahezu die gleiche Breite wie die der Monomode-Streifenwellenleiter aufweist, jedoch eine größere maximale Brechzahlerhöhung als diese besitzt.

4) Wellenlängenmultiplex- und -demultiplexeinrichtung nach Anspruch 2 und 3, dadurch  g e k e n n z e i c h n e t , daß dem bereits hergestellten Brechzahlprofil ein weiteres streifenförmiges Brechzahlprofil im Bereich des zweimodigen Streifenwellenleiters überlagert wird, wobei dieses überlagerte Brechzahlprofil parallel und symmetrisch zur Längsachse des Streifenwellenleiters verläuft und eine Breite besitzt, die kleiner als die des Streifenwellenleiters ist.

5) Wellenlängenmultiplex- und -demultiplexeinrichtung nach Anspruch 4, dadurch  g e k e n n z e i c h n e t , daß das überlagerte streifenförmige Brechzahlprofil permanent ist.

6) Wellenlängenmultiplex- und -demultiplexeinrichtung nach Anspruch 4, g e k e n n z e i c h n e t  durch Einrichtungen, die das überlagerte streifenförmige Brechzahlprofil thermooptisch erzeugen.

7) Wellenlängenmultiplex- und -demultiplexeinrichtung nach Anspruch 4, g e k e n n z e i c h n e t　durch Einrichtungen, die das überlagerte streifenförmige Brechzahlprofil elektrooptisch erzeugen.

8) Verwendung der Wellenlängenmultiplex- und -demultiplexeinrichtung nach einem der Ansprüche 2 - 7 als wellenlängenperiodischen Abzweig oder als wellenlängenperiodischen Verteiler oder als schaltbaren wellenlängenperiodischen Abzweig oder als schaltbaren wellenlängenperiodischen Verteiler oder als wellenlängenperiodische Zusammenführung oder als schaltbare wellenlängenperiodische Zusammenführung.

9) Verwendung der Wellenlängenmultiplex- und -demultiplexeinrichtung nach einem der Ansprüche 2 - 7 als N-Kanal Wellenlängenmultiplexer und -demultiplexer, dadurch　g e k e n n z e i c h n e t , daß $N = 2^n$ (mit n = 1,2,3 etc.) Wellenlängen mit Hilfe von n hintereinandergeschalteter Multiplexer-/Demultiplexerstufen nahezu verlustlos in einen Wellenleiter zusammengeführt bzw. wellenlängenselektiv　auf N Wellenleiter verteilt werden, wobei die Anzahl der in einer Stufe parallel geschalteten Multiplexer / Demultiplexer von $2^{n-1}$ in der ersten bzw. letzten Stufe auf einen einziger Multiplexer / Demultiplexer in der letzten bzw. ersten Stufe zurückgeht, die Länge der lateral zweimodigen Multiplexer-/Demultiplexer-Streifenwellenleiter dagegen von L in der ersten bzw. letzten Stufe auf $2^{n-1} \cdot L$ in der letzten bzw. ersten Stufe ansteigt.

Fig. 1

a)

b)

0152991

116

PHD 84-204EP

Fig. 2

a)

b)

Fig 3

0152991

3|6

a)

Schnitt A-A'

b)

PHD 84-204EP

416

## Fig 4

a)

b)

0152991

5|6

Fig.5

Fig 6

0152991

6/6

PHD 84-204EP